# EUROPEAN PATENT SPECIFICATION

(11) **EP 2 993 398 B1**
(45) Date of publication and mention of the grant of the patent: **30.01.2019**
(21) Application number: 15183249.0
(22) Date of filing: 01.09.2015
(51) Int. Cl.: F23J 15/02, F23J 15/00, F23J 15/06, F23J 15/08

(54) **FLUE-GAS TREATMENT APPARATUS AND ITS METHOD OF OPERATION**
ABGASBEHANDLUNGSVORRICHTUNG UND IHRE BETRIEBSVERFAHREN
APPAREIL DE TRAITEMENT DE GAZ D'ÉCHAPPEMENT ET SON PROCÉDÉ DE FONCTIONNEMENT

(30) Priority: 04.09.2014 JP 2014179803
(43) Date of publication of application: 09.03.2016
(73) Proprietor: Mitsubishi Hitachi Power Systems, Ltd., Yokohama-shi, Kanagawa 220-8401 (JP)
(72) Inventor: SHIMAMURA, Jun, Yokohama-shi, Kanagawa 220-8401 (JP); OKAWA, Tsuyoshi, Yokohama-shi, Kanagawa 220-8401 (JP); SAITO, Takayuki, Yokohama-shi, Kanagawa 220-8401 (JP); YAMANE, Nobuo, Yokohama-shi, Kanagawa 220-8401 (JP); SHIMAZU, Hiromichi, Yokohama-shi, Kanagawa 220-8401 (JP); OCHIAI, Ryota, Yokohama-shi, Kanagawa 220-8401 (JP); ISHIZAKA, Hiroshi, Yokohama-shi, Kanagawa 220-8401 (JP)
(74) Representative: TBK

(56) References cited:
- JP-A- H09 122 438
- JP-A- 2014 009 877

## Description

### [Technical Field]

The present invention relates to a flue-gas treatment apparatus for purifying a flue gas discharged from a combustion apparatus, such as a boiler, used in a thermal power system, such as a thermal power plant, and an operating method thereof.

### [Background Art]

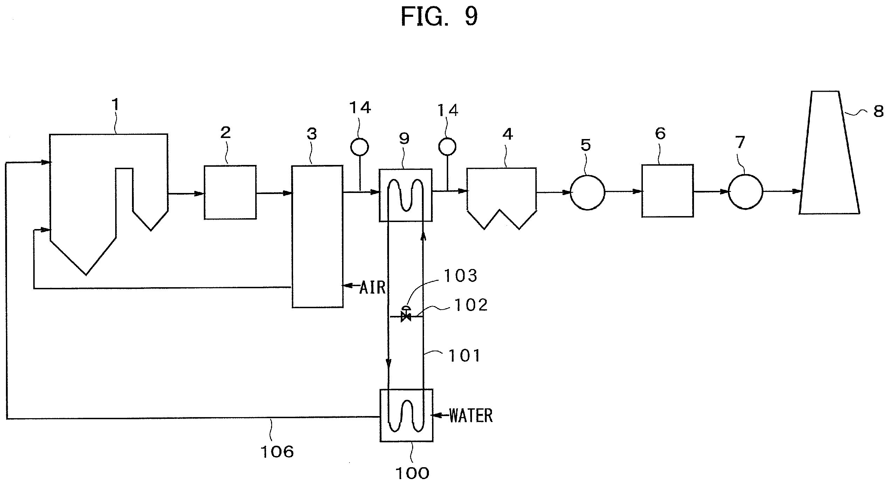

Fig. 9 discloses a flue-gas treatment apparatus according to prior art for use in a thermal power plant as disclosed in JP 4725985. Note that throughout the drawings, the same features are given the same reference signs.

In Fig. 9, a flue gas discharged from a boiler 1 disposed in a thermal power plant, an exhaust-gas emission apparatus, or the like is introduced to a denitrification unit 2 so that nitrogen oxides are removed from the flue gas. The resulting flue gas is subjected to heat exchange with combustion air to be fed to the boiler 1 in an air preheater 3. The resulting flue gas is introduced into an electrostatic precipitator 4 so that dust is mostly removed from the flue gas. The resulting flue gas is pressurized by an induced draft fan 5 and introduced into a desulfurization unit 6 so that sulfur oxides (SOx) are removed from the flue gas. The resulting flue gas is pressurized by a boost-up fan 7 and discharged from a smokestack 8.

Further, in the configuration shown in Fig. 9, a heat recovery unit 9 is disposed adjacent to the inlet of the electrostatic precipitator 4 in the flue-gas flow path; a feedwater line 106 for feeding water to the boiler 1 is disposed; a feedwater heater 100 is disposed in the feedwater line 106; a heating-medium circulation pipe 101 for communicating the heat recovery unit 9 and feedwater heater 100 is disposed; a heating-medium bypass pipe 102 which allows the heating medium on the inlet side of the heat recovery unit to circulate to the feedwater heater 100 while bypassing the heat recovery unit 9 is disposed in the heating-medium circulation pipe 101; and a heating-medium flow-rate control valve 103 is disposed in the heating-medium bypass pipe 102.

A method for operating the flue-gas treatment apparatus constitute of the composition described above is; during the startup of the boiler 1 or immediately after igniting the boiler 1 includes: when the temperature of the flue gas upstream side of the precipitator 4 in the flue-gas flow path is lower than the dew point of corrosive components in the flue gas, opening the heating-medium flow-rate control valve 103 to cause the heating medium to bypass the heat recovery unit 9 or to reduce the amount of the heating medium flowing into the heat recovery unit 9 so as to reduce the amount of heat exchange therein; subsequently, when the heat is recovered from the flue gas in the heat recovery unit 9 and the outlet flue-gas temperature of the heat recovery unit 9 reaches a set value or more, closing the heating-medium flow-rate control valve 103 in the heating-medium bypass pipe 102 so that the heating medium which has recovered heat from the flue gas in the heat recovery unit 9 is introduced into the feedwater heater 100 through the heating-medium circulation pipe 101; and after heating boiler feedwater, reintroducing the heating medium into the heat recovery unit 9 through the heating-medium circulation pipe 101 so that the flue-gas treatment apparatus is placed in a normal operating state.

Other known configurations include configurations in which a heat recovery unit is disposed in the flue-gas flow path of a boiler and in which a heating-medium circulation pipe through which a heating medium (water) that has recovered heat in the heat recovery unit is disposed and the heating medium is circulated and supplied to a boiler condensate heater (Patent Literatures 2 and 3).

The other configurations are known from JP 2014-9877 A1, which discloses a flue gas treatment apparatus according to the preamble of claim 1 and JP H09-122438 A1 (D5).

### [Citation List]

### [Patent Literature]

[Patent Literature 1] JP 4725985
[Patent Literature 2] JP 4959156
[Patent Literature 3] JP 2011-94962 A
[Patent Literature 4] JP 2014-9877 A
[Patent Literature 5] JP H09-122438 A

### [Disclosure of the Invention]

### [Problems to be solved by the invention]

For the above flue-gas treatment apparatuses of the conventional art upon recovering heat of flue-gas discharged from boiler using heat recovery unit 9, when a heating medium (feedwater) which is fed to the heat recovery unit 9 has a low temperature during the startup of the boiler, during which the flue-gas temperature is gradually increased, the heat recovery unit 9 discharges a flue gas having a low and unstable temperature.

During the startup or stop of a thermal power system, the conditions for a flue gas discharged from a boiler or the conditions of a heating medium used to generate power using turbines are often not as planned. In particular, during the startup of a thermal power system, the temperature of a heating medium (water) is often lower than the planned temperature. Even immediately after the thermal power system is started, the flue gas must be cooled to the planned temperature (90°C or the like), since the boiler is incinerating fuel. In this case, by causing the heating medium to bypass the heat recovery unit 9 and thus reducing the amount of the heating medium fed thereto, flue-gas temperature at the outlet of the heat recovery unit 9 can be controlled in terms of heat calculation. However, in actually, when the amount of the heating medium flowing into the heat recovery unit 9 is reduced, a deviation is generated in amounts of heating medium flow into the respective heat transfer pipes of the heat recovery unit 9. This prevents uniform heat exchange in the heat recovery unit 9.

The object of the invention of Patent Literature 4 is to control the heat in gas cooling device (4) by controlling volume of the heating-medium in the heating-medium circulation line (29) by changing the opening level of the valve (20) in the heating-medium bypass line (30).

If flue gas temperature at outlet of the gas cooler (4) is lower than the preset temperature, dust collected in electrostatic precipitator (5) is deposited in solid and being moistened and the operation of a flue gas treating apparatus is stopped finally. Therefore the volume of a heating-medium in the gas cooler (4) from a circulation line (29) are controlled with the valve (19) together with the valve (20) at a bypass line (30).

The object of the invention of Patent Literature 5 is "maintain a temperature of a flue gas above dew point at an outlet of the heat recovery unit (6) during startup of a combustion apparatus such as a boiler (1).

Patent Literature 5 discloses the method is disclosed the operation method of the combustion apparatus which is all or some of the volume of a heating medium is circulated at a re-heater unit (10) by controlling opening level of a valve (44) at bypass line (41) to decrease the volume of a heating medium circulated in a heat recovery unit (6), during startup of a combustion apparatus or immediately after igniting burners of the combustion apparatus. At the same time the heat recovery unit (6) is warmed by the steam heater (42) provided at a heating medium line (28) and volume of a heating medium in a heat recovery unit bypass line (30) provided in parallel to a heat conductive tube (21) in the heat recovery unit (6) is controlled until the a heating medium temperature at the outlet of the heat recovery unit (6) is higher than preset temperature (above dew point).

Invention in Patent Literature 4 or 5 do not suggest that the heating-medium from the outlet of the gas cooling device (4) in Patent Literature 4 or the heat recovery unit (6) in Patent Literature 5 is not fed to directly by pumps (18, 27) through both of bypass lines (30, 30) to the gas cooling device (4) or the heat recovery unit (6) during startup of a combustion apparatus or immediately after igniting burners of the combustion apparatus.

An object of the present invention is to avoid the destabilization of flue-gas temperature at the outlet of the heat recovery apparatus and the placement in a corrosive environment of the heat recovery apparatus, the wall surface of the flue-gas flow path downstream side of the heat recovery apparatus, and the devices in the downstream side of flue-gas flow path, because of instability of the supply amount and the temperature of the heating-medium caused by an effect of variation of the amount and the temperature of the flue-gas during startup or stop of the thermal power system.

### [Solution to Problem]

The above object is achieved by a flue gas treatment apparatus according to claim 1.

A second aspect of the present invention provides a method for operating a flue-gas treatment apparatus according to claim 2.

A third aspect of the present invention provides a flue-gas treatment apparatus according to claim 3.

A fourth aspect of the present invention provides a method for operating a flue-gas treatment apparatus according to claim 4.

A fifth aspect of the present invention provides a method for operating a flue-gas treatment apparatus according to claim 5.

### [Advantageous Effect of Invention]

According to the first or second aspect of the present invention, the heating-medium circulation line (11) through which the heating medium is circulated and fed is disposed between the heat recovery unit (9) and heating-medium using unit (10), the first heating-medium bypass line (13) and second heating-medium bypass line (15) that allow the heating medium from the outlet of the heat recovery unit (9) to circulate to the inlet of the heat recovery unit (9) while bypassing the heating-medium using unit (10) are disposed in the heating-medium circulation line (11), and the first heating-medium flow-rate control valve (CV2) and second heating-medium flow-rate control valve (CV3) are disposed in the first heating-medium bypass line (13) and second heating-medium bypass line (15), respectively. During the startup of the combustion apparatus including the boiler (1) or immediately after igniting burners of the combustion apparatus, the flow rates of the heating-medium flowing through the heating-medium bypass lines (13, 15) can be controlled by controlling the degrees of opening of the first heating-medium flow-rate control valve (CV2) and second heating-medium flow-rate control valve (CV3).

Thus, according to the first or second aspect of the present invention, when the heat recovery unit (9) recovers heat from a flue gas from the combustion apparatus such as the boiler (1) during the startup of a thermal power system or the like and when the temperature of the heating medium is low, it is possible to prevent the heating surface of the heat recovery unit (9) from being corroded due to condensation, as well as to stably keep the flue-gas temperature at the outlet of the heat recovery unit (9) in the planned state.

In other words, according to the present invention, the planned heating-medium circulation rate of the heat recovery unit (9) can be maintained owing to the first heating-medium bypass line (13) having the auxiliary pump (17) and first heating-medium flow-rate control valve (CV2) thereon, the second heating-medium bypass line (15) having the second heating-medium flow-rate control valve (CV3) thereon, which connect the heat recovery unit (9) and heating-medium using unit (10), the operation of the auxiliary pump (17), and the heating-medium flow-rate control valves (CV2, CV3). Further, owing to the circulation pump (18) disposed in the heating-medium circulation line (11), stable flue-gas temperature at the outlet of the heat recovery unit (9) and stable heating-medium temperature at the inlet of the heat recovery unit (9) can be achieved independently of the variations in the flow rate and temperature of the heating medium from the thermal power system. From these stability of the temperature, it is possible to avoid the heat recovery unit (9), the wall of the flue-gas flow path downstream thereof, and the units in the downstream flue-gas flow path from being placed in a corrosive environment, as well as to achieve stable start of the combustion apparatus.

According to the third or fourth aspect of the present invention, in the system configuration in which the heat recovery unit (9) for recovering heat from the flue gas from the combustion apparatus such as the boiler (1) is disposed independently; and heat recovered by the heat recovery unit (9) is used for boiler feedwater, if the flue-gas temperature measured by the first flue-gas thermometer (TE1) or second flue-gas thermometer (TE2) disposed at the inlet or outlet of the heat recovery unit (9) in the flue-gas flow path is lower than the preset temperature (the dew point of corrosive components in the flue gas; e.g., 90°C), the heating-medium circulation system between the heat recovery unit (9) and heating-medium using unit (10) is started in a state in which the heating-medium circulation system between the heat recovery unit (9) and heating-medium using unit (10) is separated. Thus, during the startup of the boiler (1) or the like, it is possible to reduce the risk that the heating medium warmed by the heat of the flue gas in the flue-gas flow path may be naturally convected in the system of the heat recovery unit (9) and thus the heating medium in the heat recovery unit (9) may be warmed locally and flashed (vaporized), as well as to avoid an increase in the time in which the heat recovery unit (9) and the wall of the flue-gas flow path downstream thereof, and the units in the downstream flue-gas flow path is placed in a corrosive environment.

According to the fifth aspect of the present invention, when the heating-medium circulation system between the heat recovery unit (9) and heating-medium using unit (10) is started in a state in which the heating-medium circulation system between the heat recovery unit (9) and heating-medium using unit (10) is separated, if the flue-gas temperature measured by the second flue-gas thermometer (TE2) disposed at the outlet of the heat recovery unit (9) in the flue-gas flow path is lower than the preset temperature (the dew point of corrosive components in the flue gas; e.g., 90°C), the heating medium warmed by the heat of the flue gas at the outlet of the air preheater (3) is forcefully convected in the system of the heat recovery unit (9) during the startup of the boiler (1) or the like, during which the flue-gas temperature is low. Thus, compared to the fourth aspect of the present invention, it is possible to quickly warm the heating medium in the heat recovery unit (9) locally and to reduce the risk that the heating medium may be flashed (vaporized) and to avoid an increase in the time in which the heat recovery unit (9) and the wall of the flue-gas flow path downstream thereof, and the units in the downstream flue-gas flow path is placed in a corrosive environment.

### [Brief Description of Drawings]

Fig. 1 is a flow diagram of a flue-gas treatment system of a first embodiment of the present invention.
Fig. 2 is a diagram showing details of a heating-medium flow path system for a heat recovery unit of the flue-gas treatment system in Fig. 1.
Fig. 3 is a flowchart showing a control process of the heating-medium flow path system for the heat recovery unit in Fig. 1.
Fig. 4 is a flowchart showing another control process of the heating-medium flow path system of the heat recovery unit in Fig. 1.
Fig. 5 is a diagram showing details of a heating-medium flow path system for a heat recovery unit of a flue-gas treatment system of a second embodiment of the present invention.
Fig. 6 is a flowchart showing a control process of the heating-medium flow path system for the heat recovery unit in Fig. 5.
Fig. 7 is a flowchart showing a control process of the heating-medium flow path system for the heat recovery unit in Fig. 5.
Fig. 8 is a diagram showing details of the heating-medium flow path system for a heat recovery unit of a flue-gas treatment system, which is a modification of the second embodiment of the present invention.
Fig. 9 is a flow diagram of a flue-gas treatment system of the conventional art.

### [Description of Embodiments]

Embodiments of the present invention will be described with reference to the drawings.

### [First Embodiment]

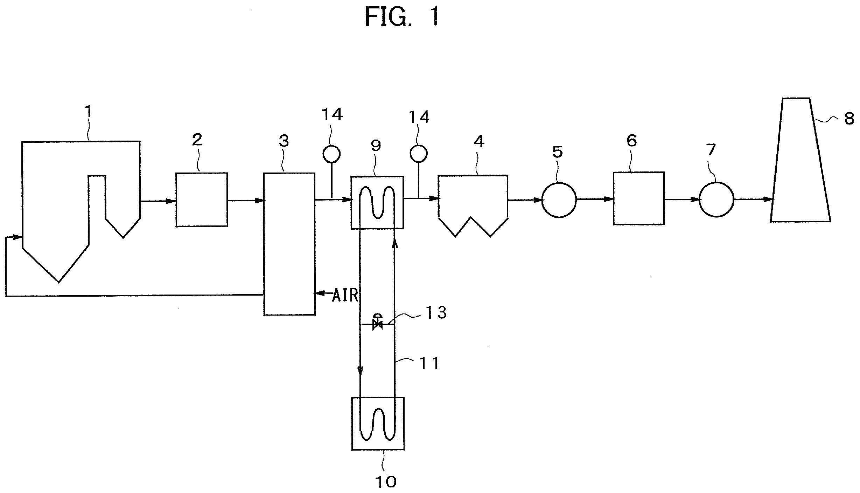

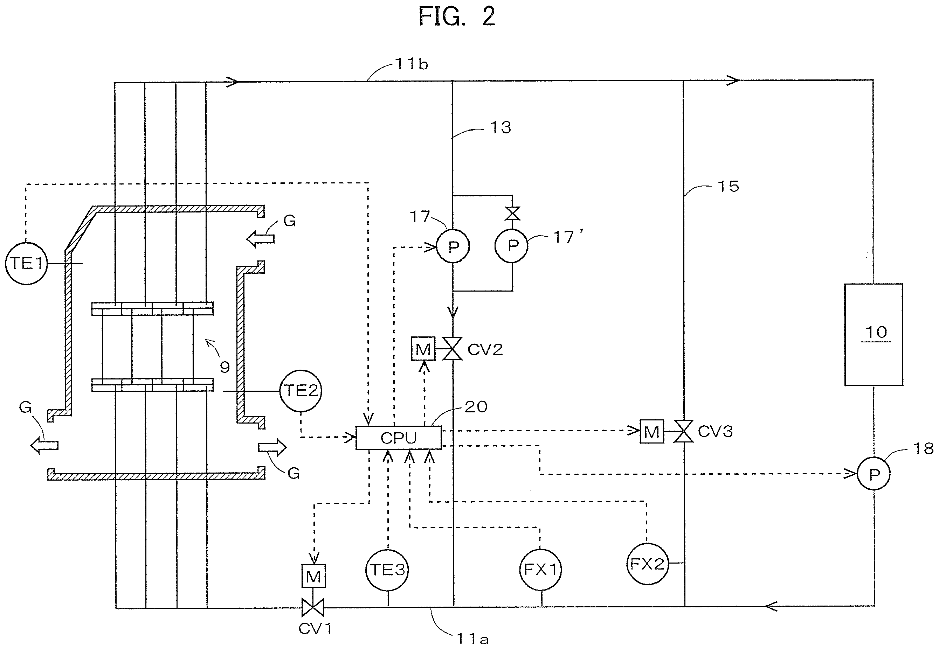

Fig. 1 is a flow diagram of a flue-gas treatment system of the present embodiment. Fig. 2 is a diagram showing an example of a heat recovery unit (gas cooler) 9 included in the flue-gas treatment system in Fig. 1 and composed of heat transfer pipes and a heating-medium flow path system through which a heating medium is fed to the heat recovery unit 9. The flue-gas treatment system shown in Fig. 1 uses a heating-medium using unit 10 in place of the feedwater heater 100, which is shown in the flow diagram of the conventional flue-gas treatment system shown in Fig. 9 and which operates using the heat of a flue gas. The heating-medium flow path system between the heat recovery unit 9 and heating-medium using unit 10 shown in Fig. 1 differs from that in Fig. 9 only partially.

As shown in Figs. 1 and 2, feedwater from a feedwater source is fed through a feedwater (heating medium) pipe to the heat recovery unit 9 using a circulation pump 18 and reduces the temperature of the flue gas, and then the feedwater whose temperature has been increased is fed to the heating-medium using unit 10. While the single heat recovery unit 9 is disposed in the flue-gas flow path through which a flue gas G flows in Fig. 1, multiple heat recovery units 9 may be disposed in parallel in the flue-gas flow path.

An inlet feedwater pipe 11a through which the heating medium is fed to the heat recovery unit 9 and an outlet feedwater pipe 11b into which the heat recovery unit 9 discharges the heating medium which has recovered heat constitute a heating-medium circulation line 11. A flue-gas temperature control valve CV1 and a heating-medium thermometer TE3 are disposed in the inlet feedwater pipe 11a so as to be adjacent to the inlets of the heat transfer pipes of the heat recovery unit 9. The flue-gas temperature control valve CV1 controls the gas temperature at the outlet of the heat recovery unit 9 in the flue-gas flow path by controlling the flow rate of the heating medium. The heating-medium thermometer TE3 measures the temperature of the heating medium in the inlet feedwater pipe 11a. A first heating-medium flowmeter FX1 is disposed in the inlet feedwater pipe 11a between the respective junctions of the inlet feedwater pipe 11a and a first heating-medium bypass line 13 and a second heating-medium bypass line 15 (to be discussed later). The first heating-medium flowmeter FX1 measures the flow rate of the heating medium in the inlet feedwater pipe 11a.

The first heating-medium bypass line 13 and second heating-medium bypass line 15 connect the inlet feedwater pipe 11a and outlet feedwater pipe 11b, which are disposed between the heat recovery unit 9 and heating-medium using unit 10. The first heating-medium bypass line 13 connects the inlet feedwater pipe 11a and outlet feedwater pipe 11b in a position closer to the heat recovery unit 9 than to the heating-medium using unit 10. The second heating-medium bypass line 15 connects the inlet feedwater pipe 11a and outlet feedwater pipe 11b in a position closer to the heating-medium using unit 10 than to the heat recovery unit 9.

An auxiliary pump 17 for feeding the heating medium from the outlet feedwater pipe 11b to the inlet feedwater pipe 11a and a first heating-medium flow-rate control valve CV2 are disposed in the first heating-medium bypass line 13. A second heating-medium flow-rate control valve CV3 for controlling the amount of the heating medium flowing from the inlet feedwater pipe 11a to the outlet feedwater pipe 11b while bypassing the heat recovery unit 9 and a second heating-medium flowmeter FX2 are disposed in the second heating-medium bypass line 15.

The heat recovery unit 9, which is disposed in the flue-gas flow path of the boiler, includes an inlet flue-gas thermometer TE1 and an outlet flue-gas thermometer TE2.

In the present embodiment, all the measurement results of the thermometers TE1, TE2, and TE3 and heating-medium flowmeters FX1 and FX2 are transmitted to a controller 20. Based on the measurement values, the controller 20 transmits operation signals to the control valves CV1, CV2, and CV3, auxiliary pump 17, and circulation pump 18.

The auxiliary pump 17 disposed in the first heating-medium bypass line 13 feeds the heating medium from the outlet feedwater pipe 11b through the first heating-medium bypass line 13 to the inlet feedwater pipe 11a. The second heating-medium bypass line 15 connects an upstream portion of the inlet feedwater pipe 11a with respect to the first heating-medium bypass line 13 and a downstream portion of the outlet feedwater pipe 11b with respect thereto. Thus, by using the circulation pump 18 disposed in the inlet feedwater pipe 11a, the heating medium is fed from the inlet feedwater pipe 11a through the second heating-medium bypass line 15 to the outlet feedwater pipe 11b.

The second heating-medium bypass line 15 is provided with the second heating-medium flow-rate control valve CV3. The second heating-medium flow-rate control valve CV3 controls the flow rate of the heating medium using a value obtained by subtracting the amount of the heating medium used in the heat recovery unit 9 from a feed heating-medium amount request signal from a flue gas source such as the boiler 1, as a heating-medium bypass flow-rate set value in the second heating-medium bypass line 15. The flow rate of the heating medium in the second heating-medium bypass line 15 is controlled while measuring it using the second heating-medium flowmeter FX2.

Specifically, when the flow rate of the heating medium flowing through the second heating-medium bypass line 15 measured by the second heating-medium flowmeter FX2 is higher than the preset bypass heating-medium flow rate of the second heating-medium bypass line 15, the second heating-medium flow-rate control valve (bypass heating-medium flow-rate control valve) CV3 is moved in a closing direction to reduce the bypass heating-medium flow rate. When the flow rate of the heating medium flowing through the second heating-medium bypass line 15 is lower than the set flow rate, the bypass heating-medium flow-rate control valve CV3 is moved in an opening direction to increase the bypass heating-medium flow rate. Thus, the flow rate of the heating medium flowing through the second heating-medium bypass line 15 is controlled.

The bypass heating-medium flow-rate control valve CV3 also detects the temperature of the heating medium flowing through the inlet feedwater pipe 11a using the heating-medium thermometer TE3 and controls the amount of the bypass heating medium, which is fed through the second heating-medium bypass line 15 to the inlet feedwater pipe 11a, so that the temperature of the heating medium becomes a preset temperature.

Further, when the input or outlet flue-gas temperature of the heat recovery unit 9 measured by the thermometer TE1 or TE2 (if there are multiple heat recovery units 9, the average of the flue-gas temperatures of the heat recovery units 9 measured by the thermometers TE1 or TE2) is higher than the set temperature of the heat recovery unit 9, the bypass heating-medium flow-rate control valve CV3 is moved in a closing direction to reduce the flow rate of the bypass heating-medium flowing through the second heating-medium bypass line 15; when the flue-gas temperature measured by the thermometer TE1 or TE2 is lower than the set temperature, the bypass heating-medium flow-rate control valve CV3 is moved in an opening direction to increase the flow rate of the bypass heating medium flowing through the second heating-medium bypass line 15.

The opening or closing of the bypass heating-medium flow-rate control valve CV3 described above is controlled by performing PI (proportional-integral) control on the difference between the set flue-gas temperature of the heat recovery unit 9 and the actual flue-gas temperature thereof (the temperature measured by the thermometer TE1 or TE2). Although not shown, the set temperature value with respect to the load of the boiler may be corrected by disposing a bias setting device.

The temperature at the inlet of the heat recovery unit 9 in the flue-gas flow path (hereafter also simply referred to as the inlet temperature of the heat recovery unit 9) is measured by the thermometer TE1, or the temperature at the outlet of the heat recovery unit 9 in the flue-gas flow path (hereafter also simply referred to as the outlet temperature of the heat recovery unit 9) is measured by the thermometer TE2. When the measured temperature is lower than or equal to the set temperature (e.g., 90°C), the flue-gas temperature control valve CV1 in the inlet feedwater pipe 11a is kept closed, since there is no need to exchange heat between the flue gas and heating medium in the heat recovery unit 9.

The sett temperature of the flue-gas in the flue-gas flow path in which the heat recovery unit 9 is disposed can be set voluntarily in accordance with the load of the boiler. Thus, adjustments are made to the average temperature in the region in which the heat recovery unit 9 is disposed, of the flue-gas flow path be kept at the set temperature.

As the flue-gas temperature is low during the startup of the boiler 1, it is necessary to recover heat from the flue gas of the boiler when the heat recovery unit 9 included in the above configuration during such a period, while preventing the inside of the flue-gas flow path downstream of the heat recovery unit 9 from being corroded due to condensation and it is also necessary to stably maintain the temperature of the heating medium flowing through the heat recovery unit 9.

For these reasons, while the temperature of the flue gas flowing through the heat recovery unit 9 is rising after the startup of the boiler 1, if the inlet or outlet flue-gas temperature of the heat recovery unit 9 is 90°C or less, the flue-gas temperature control valve CV1 is closed, and the second heating-medium flow-rate control valve CV3 is fully opened, even after starting the circulation pump 18 in the heating-medium circulation line 11.

When the flue-gas temperature at the inlet of the heat recovery unit 9 exceeds 90°C, the flue-gas temperature control valve CV1 is opened with the degree of opening which is preset with respect to the flue-gas temperature at the inlet of the heat recovery unit 9 in accordance with the program setting. When the flue-gas temperature at the inlet of the heat recovery unit 9 is more than 90°C but the flue-gas temperature at the outlet thereof is less than 90°C (at this time, the heating medium temperature at the inlet of the heat recovery unit 9 is less than the set temperature of 72°C), the flue-gas temperature control valve CV1 is closed, and the second heating-medium flow-rate control valve CV3 in the second heating-medium bypass line 15 is fully opened in order for the outlet flue-gas temperature of the heat recovery unit 9 to be quickly increased to 90°C or more.

Subsequently, by opening the first heat-medium flow-rate control valve CV2, which controls the flow rate of the heating medium in the first heating-medium bypass line 13, and by operating the auxiliary pump 17, the heating medium having a relatively high temperature from the outlet of the heat recovery unit 9 is passed through the first heating-medium bypass line 13 and circulated and fed to the inlet of the heat recovery unit 9. Thus, it is possible to prevent the inside of the flue-gas flow path downstream of the heat recovery unit 9 from being corroded due to condensation, as well as to stably maintain the temperature of the heating medium flowing through the heat recovery unit 9.

When the outlet flue-gas temperature of the heat recovery unit 9 exceeds 90°C, there is no worry that condensation may occur in the heat recovery unit 9 and the inside of the flue-gas flow path downstream thereof. Accordingly, the first heat-medium flow-rate control valve CV2, which controls the flow rate of the heating medium in the first heating-medium bypass line 13, is closed.

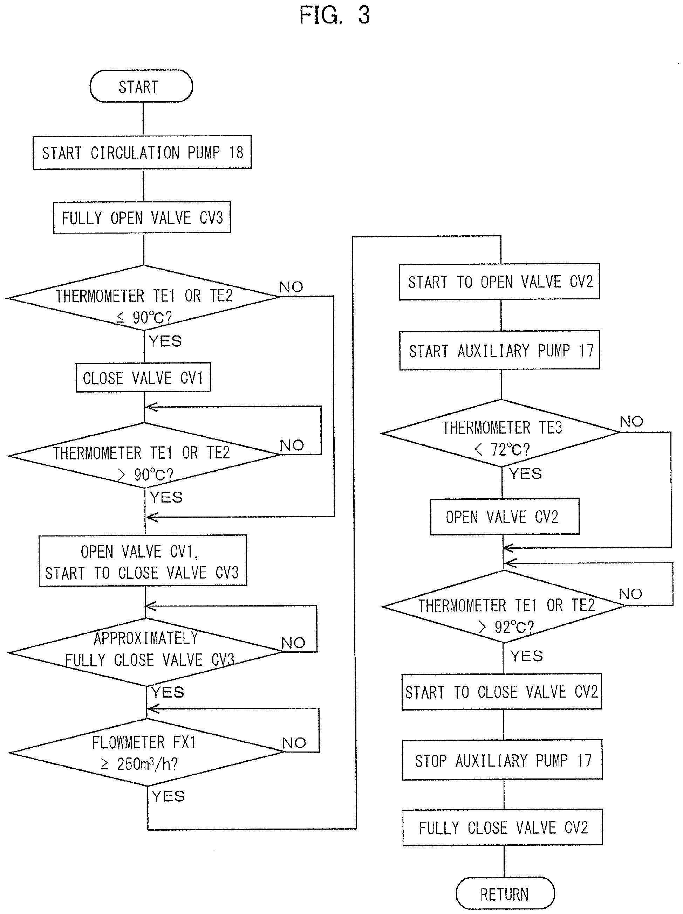

Referring to a flowchart shown in Fig. 3, there will be described a heating-medium flow-rate control process performed from when the boiler is started to when the outlet flue-gas temperature of the heat recovery unit 9 is increased to 90°C or more.

First, the circulation pump 18 is started, and the bypass heating-medium flow-rate control valve (second heating-medium flow-rate control valve) CV3 in the second heating-medium bypass line 15 is fully opened. Thus, all feedwater (heating medium) flowing into the inlet feedwater pipe 11a flows through the second heating-medium bypass line 15 while bypassing the heat recovery unit 9. And then, as long as the flue-gas temperature measured by the thermometer TE1 disposed at the flue-gas inlet of the heat recovery unit 9 or the thermometer TE2 disposed at the flue-gas outlet thereof is 90°C or less, the heat recovery unit 9 does not have to exchange the heat of the flue gas. Accordingly, the flue-gas temperature control valve CV1 in the inlet feedwater pipe 11a is kept closed.

When the flue-gas temperature at the inlet or the outlet of the heat recovery unit 9 (the flue-gas temperature measured by the thermometer TE1 or TE2) exceeds 90°C, the flue-gas temperature control valve CV1 is opened with a predetermined degree of opening, and the second heating-medium flow-rate control valve CV3 is moved in a closed direction. At this time, the second heating-medium flow-rate control valve CV3 is controlled in a closing direction so that part of the heating medium fed from the circulation pump 18 to the heat recovery unit 9 flows through the second heating-medium bypass line 15.

At this time, the flue-gas temperature control valve CV1 is controlled to start to open slightly and simultaneously the second heating-medium flow-rate control valve CV3 is controlled to start to close , the degree of opening of the flue-gas temperature control valve CV1 increases as the flue-gas temperature increases, and the amount of the heating medium flowing through the second heating-medium bypass line 15 is controlled to be reduced compared to the amount of the heating medium fed from the circulation pump 18. When the flue-gas temperature control valve CV1 is opened to a predetermined degree of opening; and when the amount of the heating medium fed from the circulation pump 18 becomes the same as the amount of the heating medium fed to the heat recovery unit 9, the second heating-medium flow-rate control valve CV3 is fully closed.

However, when the amount of the heating medium flowing from the circulation pump 18 into the heating-medium circulation line 11 exceeds the amount of the heating medium fed to the heat recovery unit 9, the second heating-medium flow-rate control valve CV3 is maintained with a predetermined degree of opening so that the heating medium is circulated to the heating-medium using unit 10 through the second heating-medium bypass line 15.

Subsequently, when it is confirmed that the amount of the heating medium flowing through the inlet feedwater pipe 11a has reached a predetermined flow rate (e.g., 250m³/h) or more, using the first heating-medium flowmeter FX1, the auxiliary pump 17 disposed in the first heating-medium bypass line 13 is automatically started. Thus, the heating medium from the outlet of the heat recovery unit 9 can be fed to the inlet thereof through the first heating-medium bypass line 13. Note that a backup auxiliary pump 17' may be disposed in a position parallel with the auxiliary pump 17.

When the auxiliary pump 17 is in operation, the degree of opening of the first heating-medium flow-rate control valve CV2 is prevented from becoming the minimum degree of opening or less. Thus, the first heating-medium flow-rate control valve CV2 is prevented from being completely closed.

The first heating-medium flow-rate control valve CV2 controls the flow rate of the heating medium so that the temperature detected by the heating-medium thermometer TE3 disposed in the inlet feedwater pipe 11a becomes a predetermined temperature (e.g., 72°C). Specifically, when the temperature detected by the heating-medium thermometer TE3 falls below 72°C, part of the heating medium heated by the heat recovery unit 9 is passed through the heating-medium bypass line 13 and added to the heating medium flowing through the inlet feedwater pipe 11a by the auxiliary pump 17. Thus, the temperature of the heating medium flowing through the inlet feedwater pipe 11a is increased.

Further, by circulating the heating medium heated by the heat recovery unit 9 to the heat recovery unit 9 through the first heating-medium bypass line 13 with the first heating-medium flow-rate control valve CV2 opened, it is possible to increase the temperature of the heating medium and thus to keep the outlet flue-gas temperature of the heat recovery unit 9 a little too high.

When the temperature measured by the thermometer TE1 or TE2 becomes higher than 90°C by a predetermined temperature (2°C), the first heating-medium flow-rate control valve CV2 is closed, and simultaneously the auxiliary pump 17 is stopped, or the heating medium is fed to a minimum flow line (not shown). Thus, the heating medium heated by the heat recovery unit 9 is fed to another heating-medium using unit 10 (not shown) without flowing through the first heating-medium bypass line 13, and heat is transferred in the other heating-medium using unit 10.

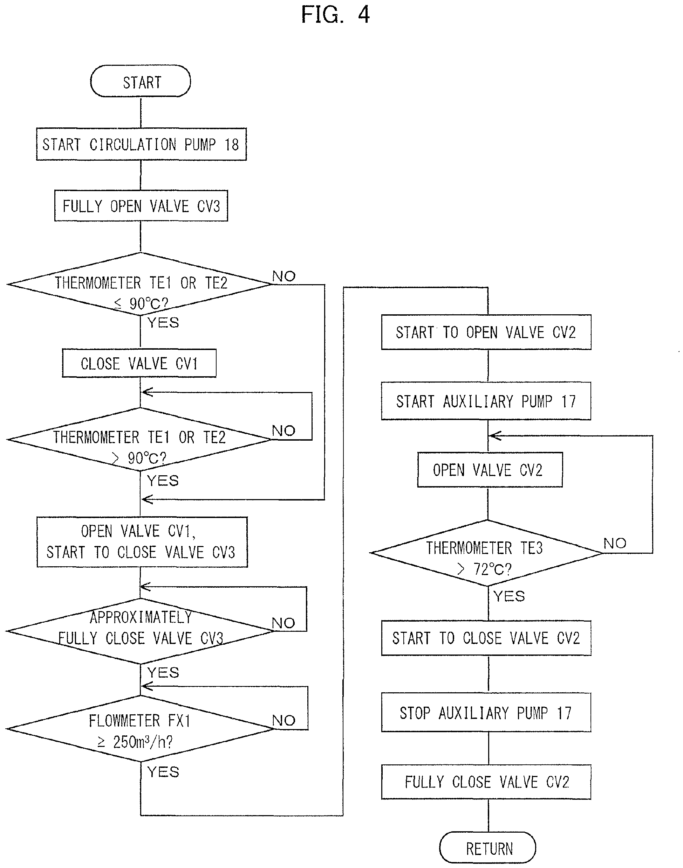

As shown in Fig. 4, after the heating-medium temperature detected by the heating-medium thermometer TE3 disposed in the inlet feedwater pipe 11a is controlled to become the predetermined temperature (e.g., 72°C), the first heating-medium flow-rate control valve CV2 may be operated as follows.

That is, when the heating-medium temperature detected by the heating-medium thermometer TE3 falls below 72°C, part of the heating medium heated by the heat recovery unit 9 is passed through the first heating-medium bypass line 13 and added to the heating medium flowing through the inlet feedwater pipe 11a by the auxiliary pump 17. Thus, the temperature of the heating medium flowing through the inlet feedwater pipe 11a is increased, so that the temperature detected by the heating-medium thermometer TE3 exceeds 72°C. When the temperature detected by the first heating-medium thermometer TE3 exceeds 72°C, the operation to close the first heating-medium flow-rate control valve CV2 is started; then the auxiliary pump 17 is stopped; and then the first heating-medium flow-rate control valve CV2 is closed.

According to the series of steps shown in Figs. 3 and 4, during the startup of the boiler, during which the flue-gas temperature is low, the heating medium whose temperature is low is prevented from being fed to the heat recovery unit 9. Thus, the inside of the flue-gas flow path downstream of the heat recovery unit 9 is prevented from being corroded due to condensation. Further, when the flue-gas temperature is the predetermined temperature or more, even if the temperature of the heating medium fed from the heating-medium circulation line 11 to the heat recovery unit 9 by the circulation pump 18 is reduced to the predetermined temperature or less, it is possible to prevent the inside of the flue-gas flow path downstream of the heat recovery unit 9 from being corroded due to condensation, as well as to stably keep high the temperature of the heating medium flowing through the heat recovery unit 9.

### [Second Embodiment]

In the flue-gas treatment apparatus of the first embodiment, during the startup of the boiler 1, the second heating-medium flow-rate control valve CV3 in the second heating-medium bypass line 15 is fully opened to circulate the heating medium through the second heating-medium bypass line 15. When the flue-gas temperature measured by the thermometer TE1 or TE2 disposed at the inlet or outlet of the heat recovery unit 9 in the flue-gas flow path is lower than the preset temperature (e.g., 90°C), the flue-gas temperature control valve CV1 in the heating-medium circulation line 11 is kept closed. The heating medium confined within the heat recovery unit (gas cooler) 9 recovers heat from the flue gas and thus is gradually warmed. However, when the temperature of the heating medium reaches a certain temperature, the heating medium may be flashed (be vaporized) and thus may cause a water hammer phenomenon, which may damage the heat transfer pipes in the heat recovery unit 9.

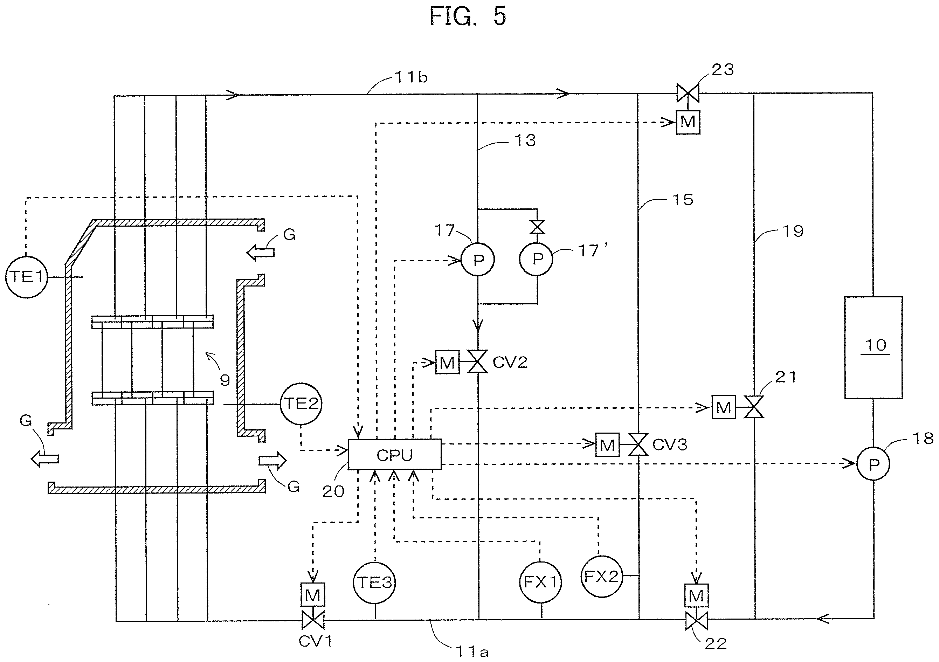

The present embodiment is a configuration for stably operating a heat recovery unit (gas cooler) 9 during the startup of a boiler, without causing a water hammer phenomenon. As shown in Fig. 5, this configuration is characterized in that a third heating-medium bypass line 19 is additionally disposed in the configuration shown in Fig. 2.

The third heating-medium bypass line 19 is disposed in parallel with a first heating-medium bypass line 13 and a second heating-medium bypass line 15 and connect an inlet feedwater pipe 11a and an outlet feedwater pipe 11b of a heat medium circulation line 11 so that the heating medium from the outlet of a heating-medium using unit 10 is returned to the inlet thereof while bypassing all of the gas cooler 9, first heating-medium bypass line 13, and second heating-medium bypass line 15.

A first on/off valve 21 is disposed in the third heating-medium bypass line 19. A second on/off valve 22 is disposed in the inlet feedwater pipe 11a between the junction of the second heating-medium bypass line 15 and inlet feedwater pipe 11a and the junction of the third heating-medium bypass line 19 and inlet feedwater pipe 11a. A third on/off valve 23 is disposed in the outlet feedwater pipe 11b between the junction of the second heating-medium bypass line 15 and outlet feedwater pipe 11b and the junction of the third heating-medium bypass line 19 and outlet feedwater pipe 11b.

As in the configuration shown in Fig. 2, auxiliary pumps 17 and 17' are disposed in parallel in the first heating-medium bypass line 13. A circulation pump 18 for circulating and feeding the heating medium to the gas cooler 9 is disposed in the inlet feedwater pipe 11a upstream of the junction of the third heating-medium bypass line 19 and inlet feedwater pipe 11a.

Further, as in the configuration of the first embodiment, a first flue-gas thermometer TE1 for measuring the temperature of the flue gas is disposed adjacent to the inlet of the gas cooler 9 in the flue-gas flow path; a second flue-gas thermometer TE2 for measuring the temperature of the flue gas is disposed adjacent to the outlet of the gas cooler 9 in the flue-gas flow path; and a heating-medium thermometer TE3 for measuring the temperature of the heating medium in the heating-medium circulation line 11 is disposed adjacent to the inlet of the gas cooler 9.

As in the configuration shown in Fig. 2, in the configuration shown in Fig. 5 also, signals measured by the flue-gas thermometers TE1 and TE2 and heating-medium thermometer TE3 are inputted to a controller 20. Based on these pieces of information, the controller 20 outputs signals to the flue-gas temperature control valves CV1, CV2, and CV3 and on/off valves 21, 22, and 23.

A method for operating a flue-gas treatment apparatus having the above configuration and used in a combustion apparatus including a boiler 1 during the startup of a combustion apparatus including a boiler 1 or immediately after igniting the burners of the combustion apparatus includes:
(a) fully opening the first on/off valve 21, fully closing the second on/off valve 22 and third on/off valve 23, starting the circulation pump 18 in the heating-medium circulation line 11, and circulating the heating medium between the third heating-medium bypass line 19 and heating-medium using unit 10;
(b) when the flue-gas temperature measured by the first flue-gas thermometer TE1 or second flue-gas thermometer TE2 disposed at the inlet or outlet of the heat recovery unit (gas cooler) 9 in the flue-gas flow path is lower than a preset temperature (the dew point of corrosive components in the flue gas; e.g., 90°C), fully opening the first on/off valve 21 in the third heating-medium bypass line 19, keeping fully closed the second on/off valve 22 and third on/off valve 23 in the heating-medium circulation line 11, opening the flue-gas temperature control valve CV1 in the heating-medium circulation line 11 and second heating-medium flow-rate control valve CV3 so that the heating medium naturally circulates between second heating-medium bypass line 15 and heat recovery unit 9; and
(c) when the flue-gas temperature measured by the first flue-gas thermometer TE1 or second flue-gas thermometer TE2 at the inlet or outlet of the heat recovery unit 9 in the flue-gas flow path becomes higher than the preset temperature (90°C), opening the second on/off valve 22 and third on/off valve 23, closing the first on/off valve 21, and simultaneously starting to close the second heating-medium flow-rate control valve CV3 of the second heating-medium bypass line 15 to start to circulate the heating medium between the heat recovery unit 9 and heating-medium using unit 10 through the heating-medium circulation line 11.

There may be employed a flue-gas treatment apparatus operating method which includes, instead of the above (b), when the flue-gas temperature measured by the first flue-gas thermometer TE1 or second flue-gas thermometer TE2 is lower than the preset temperature (the dew point of corrosive components in the flue gas; e.g., 90°C), opening the flue-gas temperature control valve CV1 and opening the second heating-medium flow-rate control valve CV3 in the second heating-medium bypass line 15 to circulate the heating medium between the second heating-medium bypass line 15 and heat recovery unit (gas cooler) 9, further opening the first heating-medium flow-rate control valve CV2 in the first heating-medium bypass line 13, and starting the auxiliary pump 17 to forcefully circulate the heating medium between the first heating-medium bypass line 13 and heat recovery unit 9.

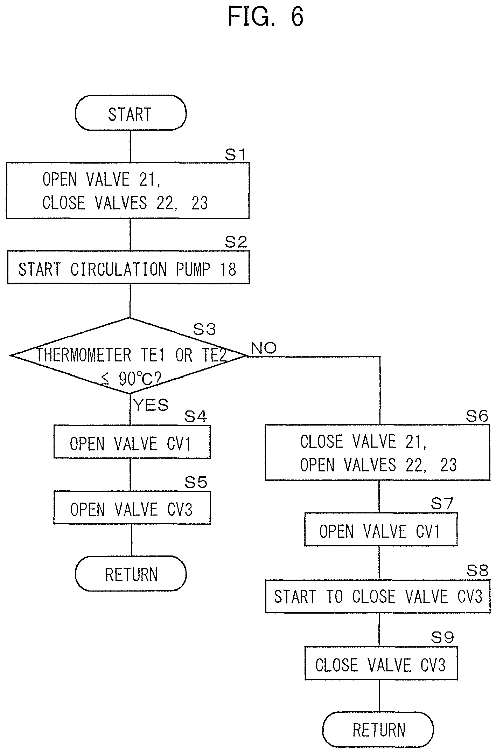

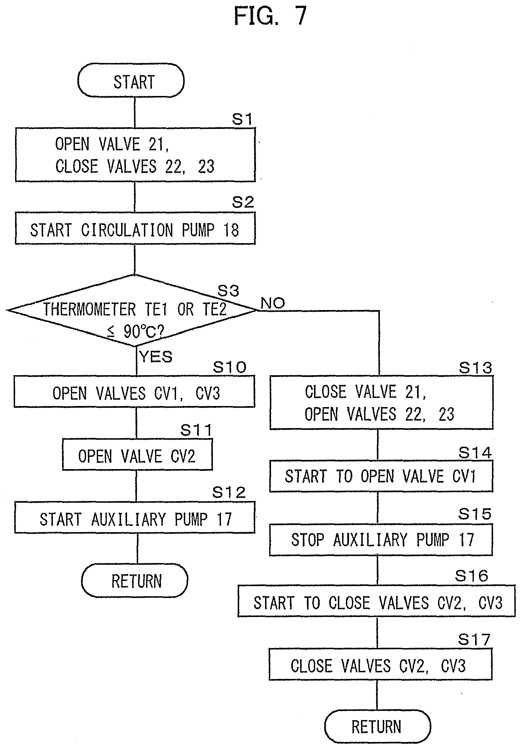

Referring to flowcharts shown in Figs. 6 and 7, there will be described a heating-medium flow-rate control process according to the second embodiment which is performed until the outlet flue-gas temperature of the heat recovery unit 9 becomes 90°C or more during the startup of the combustion apparatus including the boiler 1 or immediately after igniting the combustion apparatus.

Initial control steps include fully opening the first on/off valve 21, fully closing the second on/off valve 22 and third on/off valve 23 in the heating-medium circulation line 11, and starting the circulation pump 18 so that the heating medium flowing into the outlet feedwater pipe 11b is circulated through the third heating-medium bypass line 19, heating-medium using unit 10, and inlet feedwater pipe 11a.

Subsequent control steps include steps according to the flow of Fig. 6 and steps according to the flow of Fig. 7.

First, the control steps according to the flow of Fig. 6 will be described. The control steps includes when the flue-gas temperature measured by the first flue-gas thermometer TE1 or second flue-gas thermometer TE2 disposed at the inlet or outlet of the gas cooler 9 in the flue-gas flow path is lower than or equal to the preset temperature (the dew point of corrosive components in the flue gas; e.g., 90°C), opening the flue-gas temperature control valve CV1 in the heating-medium circulation line 11 and opening the second heating-medium flow-rate control valve CV3 in the second heating-medium bypass line 15 so that the heating medium in the gas cooler 9 naturally circulates between the gas cooler 9 and second heating-medium bypass line 15.

The control steps also include when the flue-gas temperature measured by the first flue-gas thermometer TE1 or second flue-gas thermometer TE2 at the inlet or outlet of the heat recovery unit 9 in the flue-gas flow path becomes higher than the preset temperature (e.g., 90°C), fully closing the first on/off valve 21 in the third heating-medium bypass line 19, fully opening the second on/off valve 22 and third on/off valve 23 in the heating-medium circulation line 11, opening the flue-gas temperature control valve CV1 in the heating-medium circulation line 11, and starting to close the second heat medium flow rate control valve CV3 so that the flow rates of the heating medium flowing through the heating-medium bypass lines 13 and 15 are gradually reduced.

Thus, during the startup of the boiler, it is possible to avoid an increase in the time in which the flue-gas temperature is low and thus a corrosive environment is generated. Further, by controlling the degrees of opening of the flue-gas temperature control valve CV1 and second heating-medium flow-rate control valve CV3 in the gas cooler system (the entire heating-medium circulation system between the heat recovery unit 9 and heating-medium using unit 10), it is possible to reduce the risk that, during the startup of the boiler 1, the heating medium warmed by heat exhausted from the outlet of the air preheater 3 may be convected naturally and the heating medium within the gas cooler 9 may be warmed locally and flashed (vaporized).

Next, the control steps according to the flow of Fig. 7 will be described.

The control steps includes when the flue-gas temperature measured by the first flue-gas thermometer TE1 or second flue-gas thermometer TE2 at the inlet or outlet of the gas cooler 9 in the flue-gas flow path is lower than or equal to the preset temperature (the dew point of corrosive components in the flue gas; e.g., 90°C), opening the flue-gas temperature control valve CV1 in the heating-medium circulation line 11 and the second heating-medium flow-rate control valve CV3 in the second heating-medium bypass line 15 and opening the first heating-medium flow-rate control valve CV2 in the first heating-medium bypass line 13 so that the feedwater (heating medium) is circulated among the gas cooler 9, first heating-medium bypass line 13, and second heating-medium bypass line 15. Since the auxiliary pump 17 is disposed in the first heating-medium bypass line 13, the heating medium can be more smoothly circulated between the heat recovery unit 9 and heating-medium using unit 10 by starting the auxiliary pump 17.

The control steps also includes when the flue-gas temperature measured by the first flue-gas thermometer TE1 or second flue-gas thermometer TE2 at the inlet or outlet of the gas cooler 9 in the flue-gas flow path becomes higher than the preset temperature (e.g., 90°C), fully closing the first on/off valve 21 in the third heating-medium bypass line 19, fully opening the second on/off valve 22 and third on/off valve 23 in the heating-medium circulation line 11, starting to open the flue-gas temperature control valve CV1, stopping the operating auxiliary pump 17, and simultaneously starting to close the first heating-medium flow-rate control valve CV2 and second heating-medium flow-rate control valve CV3 so that the flow rates of the heating medium flowing through the heating medium bypass lines 13 and 15 are gradually reduced.

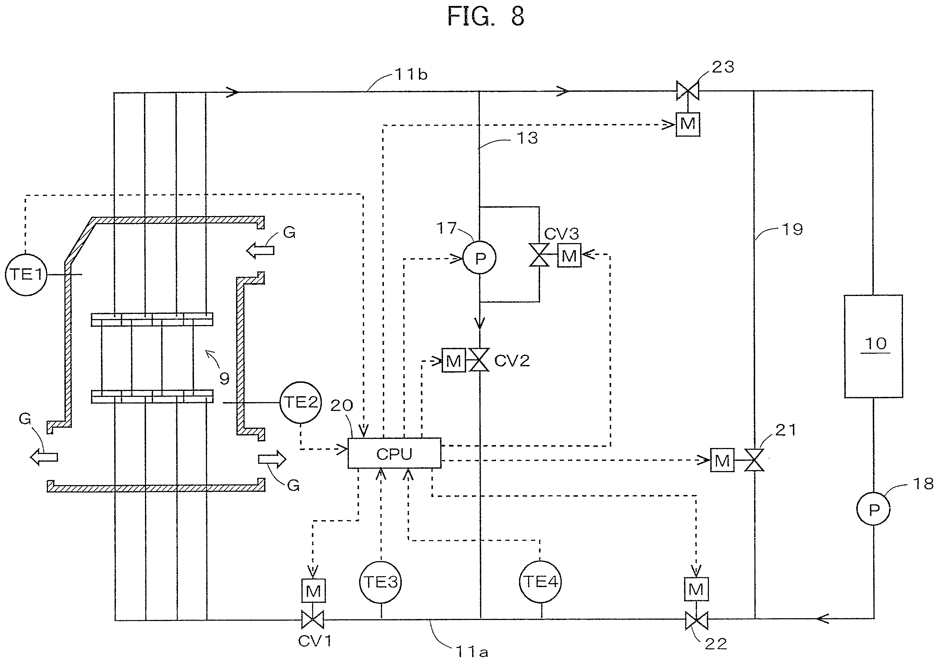

Alternatively, a second heating-medium flow-rate control valve CV3 as shown in Fig. 8 may be disposed in place of the auxiliary pump 17' in Fig. 5, which is a backup of the auxiliary pump 17. Thus, the second heating-medium bypass line 15 can be removed. Even in this case, advantageous effects similar to those of the configuration in Fig. 5 can be obtained.

**[Description of Reference Signs]**

| | |
|---|---|
| 1 boiler 1 | 2 denitrification unit |
| 3 air preheater | 4 electrostatic precipitator |
| 5 induced draft fan | 6 desulfurization unit |
| 7 boost-up fan | 8 smokestack |
| 9 heat recovery unit | 10 heating-medium using unit |
| 11a inlet feedwater pipe | 11b outlet feedwater pipe |
| 13 first heating-medium bypass line | |
| 15 second heating-medium bypass line | |
| 17, 17' auxiliary pump | |
| 18 circulation pump | |
| 19 third heating-medium bypass line | |
| 20 controller | |
| 21 first on/off valve | |
| 22 second on/off valve | |
| 23 third on/off valve | |
| CV1 flue-gas temperature control valve | |
| CV2 first heating-medium flow-rate control valve | |
| CV3 second heating-medium flow-rate control valve (bypass heating-medium flow-rate control valve) | |
| TE1, TE2 gas thermometer | |
| TE3 heating-medium thermometer | |
| FX1 first heating-medium flowmeter | |
| FX2 second heating-medium flowmeter | |

## Claims

1. A flue-gas treatment apparatus, wherein a precipitator (4) capable of treating a dust containing flue gas of a combustion apparatus including a boiler (1) and a desulfurization unit (6) capable of treating sulfur oxides containing flue gas are disposed sequentially from an upstream side of a flue-gas flow path, comprising:
a heat recovery unit (9) connected to the flue-gas flow path at an inlet of the precipitator (4),
a heating-medium using unit (10) connected to a region independent of the flue-gas flow path,
a heating-medium circulation line (11) through which a heating medium is caopable of being circulated and fed is connected between the heat recovery unit (9) and the heating-medium using unit (10),
a flue-gas temperature control valve (CV1) for controlling a temperature of the flue gas passing through the flue-gas flow path connected to the heating-medium circulation line (11),
a first heating-medium bypass line (13) capable of allowing the heating medium from an outlet of the heat recovery unit (9) to circulate to an inlet of the heat recovery unit (9) while bypassing the heating-medium using unit (10) connected to the heating-medium circulation line (11),
a first heating-medium flow-rate control valve (CV2) connected to the first heating-medium bypass line (13),
a second heating-medium bypass line (15) capable of allowing the heating medium from an outlet of the heating-medium using unit (10) to return to an inlet of the heating-medium using unit (10) while bypassing the heat recovery unit (9) and the first heating-medium bypass line (13) connected to the heating-medium circulation line (11),
a second heating-medium flow-rate control valve (CV3) connected to the second heating-medium bypass line (15),
**characterized in that**:
an auxiliary pump (17) capable of feeding the heating medium from the outlet of the heat recovery unit (9) to the inlet of the heat recovery unit (9) connected to the first heating-medium bypass line (13),
a circulation pump (18) capable of circulating and feeding the heating medium 10 to the heat recovery unit (9) connected to the heating-medium circulation line (11) upstream of a junction of the heating-medium circulation line (11) and the second heating-medium bypass line (15),
a first flue-gas thermometer (TE1) that measures the temperature of the flue gas is disposed at the inlet of the heat recovery unit (9) in the flue-15 gas flow path,
a second flue-gas thermometer (TE2) capable of measuring the temperature of the flue gas is disposed at the outlet of the heat recovery unit (9) linking the flue-gas flow path, and
a heating-medium thermometer (TE3) capable of measuring the temperature 20 of the heating medium is disposed in the heating-medium circulation line (11) at the inlet of the heat recovery unit (9).

2. A method for operating the flue-gas treatment apparatus of claim 1, wherein during startup or 25 immediately after ignition, the method inludes :
(a) starting the circulation pump (18) and fully opening the second heating-medium flow-rate control valve (CV3) to circulate the heating medium through the second heating-medium bypass line (15);
(b) when the temperature of the flue gas measured by the first flue-gas thermometer (TE1) the temperature of the flue gas measured by the second flue-gas thermometer (TE2) is lower than a preset temperature, the flue-gas temperature control valve (CV1) linking the heating-medium circulation line (11) is kept closed;
(c) when the temperature of the flue gas measured by the first flue-gas thermometer (TE1) or the temperature of the flue gas measured by the second flue-gas thermometer (TE2) becomes higher than the preset temperature, starting to open the flue-gas temperature control valve (CV1) to start to circulate the heating medium through the heating-medium circulation line (11) and simultaneously starting to close the second heating-medium flow-rate control valve (CV3);
(d) starting to open the first heating-medium flow-rate control valve (CV2) with the second heating-medium flow-rate control valve (CV3) not completely closed and simultaneously starting the auxiliary pump (17) to feed the heating medium into the first heating-medium bypass line (13);
(e) controlling the degree of opening of the first heating-medium flow-rate control valve (CV2) so that the temperature of the heating medium does not fall below a specified temperature, on the basis of the temperature of the heating medium measured by the heating-medium thermometer (TE3); and
(f) when the temperature of the flue gas measured by the first flue-gas thermometer (TE1) the temperature of the flue gas measured by the second flue-gas thermometer (TE2) or the temperature of the heating medium measured by the heating-medium thermometer (TE3)becomes higher than the preset temperature by a predetermined temperature, stopping to operate the auxiliary pump (17) and subsequently closing the first heating-medium flow-rate control valve (CV2).

3. A flue-gas treatment apparatus according to claim 1 wherein:
a third heating-medium bypass line (19) capable of allowing the heating medium from the outlet of the heating-medium using unit (10) to return to the inlet of the heating-medium using unit (10) while bypassing the heat recovery unit (9), the first heating-medium bypass line (13), and the second heating-medium bypass line (15),
a first on/off valve (21) connected to the third heating-medium bypass line (19),
a second on/off valve (22) connected to the heating-medium circulation line (11) between a junction of the heating-medium circulation line (11) and the second heating-medium bypass line (15) and a junction of the heat medium circulation line (11) and the third heating-medium bypass line (19),
a third on/off valve (23) connected to the heating-medium circulation line (11) between a junction of the heating-medium circulation line (11) and the second heating-medium bypass line (15) and a junction of the heat medium circulation line (11) and the third heating-medium bypass line (19), and
the second on/off valve (22) and third on/off valve (23) are disposed upstream and downstream, respectively, in the heating-medium circulation line (11).

4. A method for operating a flue-gas treatment apparatus according to claim 2,
(a) fully opening the first on/off valve (21), fully closing the second on/off valve (22) and the third on/off valve (23), and starting the circulation pump (18) to circulate the heating medium between the third heating-medium bypass line (19) and the heating-medium using unit (10);
(b) when the temperature of the flue gas measured by the first flue-gas thermometer (TE1) or the temperature of the flue gas measured by the second flue-gas thermometer (TE2) is lower than a preset temperature, opening the flue-gas temperature control valve (CV1) and opening the second heating-medium flow-rate control valve (CV3) so that the heating medium normally circulates between the second heating-medium bypass line (15) and the heat recovery unit (9); and
(c) when the temperature of the flue gas measured by the first flue-gas thermometer (TE1) or the temperature of the flue gas measured by the second flue gas thermometer (TE2) becomes higher than the preset temperature, opening the second on/off valve (22) and the third on/off valve (23), closing the first on/off valve (21), and simultaneously starting to close the first heating-medium flow-rate control valve (CV2) in the first heating-medium bypass line (13) and the second heating-medium flow-rate control valve (CV3) in the second heating-medium bypass line (15) to start to circulate the heating medium between the heat recovery unit (9) and the heating-medium using unit (10) through the heating-medium circulation line (11).

5. A method for operating a flue-gas treatment apparatus according to claim 4, comprising, instead of step (b),
(d) when the temperature of the flue gas measured by the first flue-gas thermometer (TE1) or the temperature of the flue gas measured by the second flue-gas thermometer (TE2) is lower than a preset temperature, opening the flue-gas temperature control valve (CV1), opening the second heating-medium flow-rate control valve (CV3) to circulate the heating medium between the second heating-medium bypass line (15) and the heat recovery unit (9), the method further comprising
opening the first heating-medium flow-rate control valve (CV2)and starting the auxiliary pump (17) to forcefully circulate the heating medium between the first heating-medium bypass line (13) and the heat recovery unit (9).

## Patentansprüche

1. Rauchgasbehandlungsvorrichtung, wobei ein Abscheider (4), der in der Lage ist, ein Staub enthaltendes Rauchgas einer Verbrennungsvorrichtung einschließlich eines Boilers zu behandeln, und eine Entschwefelungseinheit (6), die in der Lage ist, Schwefeloxide enthaltendes Rauchgas zu behandeln, der Reihe nach von einer stromaufwärtigen Seite einer Rauchgasströmungsbahn aus angeordnet sind, die Folgendes aufweist:
eine Wärmerückgewinnungseinheit (9), die mit der Rauchgasströmungsbahn an einem Einlass des Abscheiders (4) verbunden ist,
eine Heizmediumverwendungseinheit (10), die mit einem Bereich verbunden ist, der von der Rauchgasströmungsbahn unabhängig ist,
eine Heizmediumzirkulationsleitung (11), durch die ein Heizmedium in der Lage ist, zirkuliert und gefördert zu werden, zwischen der Wärmerückgewinnungseinheit (9) und der Heizmediumverwendungseinheit (10) angeschlossen ist,
ein Rauchgastemperatursteuerventil (CV1) zum Steuern einer Temperatur des Rauchgases, das durch die Rauchgasströmungsbahn tritt, die mit der Heizmediumzirkulationsleitung (11) verbunden ist,
eine erste Heizmediumumgehungsleitung (13), die in der Lage ist, dem Heizmedium von einem Auslass der Wärmerückgewinnungseinheit (9) aus zu ermöglichen, zu einem Einlass der Wärmerückgewinnungseinheit (9) zu zirkulieren, während es die Heizmediumverwendungseinheit (10) umgeht, die mit der Heizmediumzirkulationsleitung (11) verbunden ist,
ein erstes Heizmediumströmungsratensteuerventil (CV2), das mit der ersten Heizmediumumgehungsleitung (13) verbunden ist,
eine zweite Heizmediumumgehungsleitung (15), die in der Lage ist, dem Heizmedium von einem Auslass der Heizmediumverwendungseinheit (10) aus zu ermöglichen, zu einem Einlass der Heizmediumverwendungseinheit (10) zurückzukehren, während die Wärmerückgewinnungseinheit (9) und die erste Heizmediumumgehungsleitung (13), die mit der Heizmediumzirkulationsleitung (11) verbunden ist, umgangen wird,
ein zweites Heizmediumströmungsratensteuerventil (CV3), das mit der zweiten Heizmediumumgehungsleitung (15) verbunden ist,
**dadurch gekennzeichnet, dass**
eine Hilfspumpe (17), die in der Lage ist, das Heizmedium von dem Auslass der Wärmerückgewinnungseinheit (9) zu dem Einlass der Wärmerückgewinnungseinheit (9) zu fördern, die mit der ersten Heizmediumumgehungsleitung (13) verbunden ist,
eine Zirkulationspumpe (18), die in der Lage ist, das Heizmedium zu der Wärmerückgewinnungseinheit (9), die mit der Heizmediumzirkulationsleitung (11) stromaufwärts einer Verbindung der Heizmediumzirkulationsleitung (11) und der zweiten Heizmediumumgehungsleitung (15) verbunden ist, zu zirkulieren und zu fördern,
ein erstes Rauchgasthermometer (TE1), das die Temperatur des Rauchgases misst, an dem Einlass der Wärmerückgewinnungseinheit (9) in der Rauchgasströmungsbahn angeordnet ist,
ein zweites Rauchgasthermometer (TE2), das in der Lage ist, die Temperatur des Rauchgases zu messen, an dem Auslass der Wärmerückgewinnungseinheit (9) angeordnet ist, die mit der Rauchgasströmungsbahn verbunden ist, und
ein Heizmediumthermometer (TE3), das in der Lage ist, die Temperatur des Heizmediums zu messen, in der Heizmediumzirkulationsleitung (11) an dem Auslass der Wärmerückgewinnungseinheit (9) angeordnet ist.

2. Verfahren zum Betreiben der Rauchgasbehandlungsvorrichtung von Anspruch 1, wobei
während eines Startens oder unmittelbar nach einer Zündung das Verfahren Folgendes aufweist:
(a) ein Starten der Zirkulationspumpe (18) und ein vollständiges Öffnen des zweiten Heizmediumströmungsratensteuerventils (CV3), um das Heizmedium durch die zweite Heizmediumumgehungsleitung (15) zu zirkulieren;
(b) wenn die Temperatur des Rauchgases, die von dem ersten Rauchgasthermometer (TE1) gemessen wird, oder die Temperatur des Rauchgases, die von dem zweiten Rauchgasthermometer (TE2) gemessen wird, geringer als eine voreingestellte Temperatur ist, das Rauchgastemperatursteuerventil (CV1), das mit der Heizmediumzirkulationsleitung (11) verbunden ist, geschlossen gehalten wird;
(c) wenn die Temperatur des Rauchgases, die von dem ersten Rauchgasthermometer (TE1) gemessen wird, oder die Temperatur des Rauchgases, die von dem zweiten Rauchgasthermometer (TE2) gemessen wird, höher als die voreingestellte Temperatur wird, ein Starten eines Öffnens des Rauchgastemperatursteuerventils (CV1), um ein Zirkulieren des Heizmediums durch die Heizmediumzirkulationsleitung (11) zu starten, und ein simultanes Starten eines Schließens des zweiten Heizmediumströmungsratensteuerventils (CV3);
(d) ein Starten eines Öffnens des ersten Heizmediumströmungsratensteuerventils (CV2) mit dem zweiten Heizmediumströmungsratensteuerventils (CV3), das nicht vollständig geschlossen ist, und ein simultanes Starten der Hilfspumpe (17), um das Heizmedium in die erste Heizmediumumgehungsleitung (13) zu fördern;
(e) ein Steuern des Öffnungsgrads des ersten Heizmediumströmungsratensteuerventils (CV2), sodass die Temperatur des Heizmediums nicht unter eine spezifizierte Temperatur fällt, auf der Basis der Temperatur des Heizmediums, die von dem Heizmediumthermometer (TE3) gemessen wird; und
(f) wenn die Temperatur des Rauchgases, die von dem ersten Rauchgasthermometer (TE1) gemessen wird, oder die Temperatur des Rauchgases, die von dem zweiten Rauchgasthermometer (TE2) gemessen wird, oder die Temperatur des Heizmediums, die von dem Heizmediumthermometer (TE3) gemessen wird, höher als die voreingestellte Temperatur um eine vorbestimmte Temperatur wird, ein Stoppen eines Betätigens der Hilfspumpe (17) und ein anschließendes Schließen des ersten Heizmediumströmungsratensteuerventils (CV2).

3. Rauchgasbehandlungsvorrichtung nach Anspruch 1, wobei:
eine dritte Heizmediumumgehungsleitung (19) in der Lage ist, dem Heizmedium von dem Auslass der Heizmediumverwendungseinheit (10) zu ermöglichen, zu dem Einlass der Heizmediumverwendungseinheit (10) zurückzukehren, während es die Wärmerückgewinnungseinheit (9), die erste Heizmediumumgehungsleitung (19) und die zweite Heizmediumumgehungsleitung (15) umgeht,
ein erstes An-/Aus-Ventil (21) mit der dritten Heizmediumumgehungsleitung (19) verbunden ist,
ein zweites An-/Aus-Ventil (22) mit der Heizmediumzirkulationsleitung (11) zwischen einer Verbindungsstelle der Heizmediumzirkulationsleitung (11) und der zweiten Heizmediumumgehungsleitung (15) und einer Verbindungsstelle der Heizmediumzirkulationsleitung (11) und der dritten Heizmediumumgehungsleitung (19) verbunden ist,
ein drittes An-/Aus-Ventil (23) mit der Heizmediumzirkulationsleitung (11) zwischen einer Verbindungsstelle der Heizmediumzirkulationsleitung (11) und der zweiten Heizmediumumgehungsleitung (15) und einer Verbindungsstelle der Heizmediumzirkulationsleitung (11) und der dritten Heizmediumumgehungsleitung (19) verbunden ist, und
das zweite An-/Aus-Ventil (22) und das dritte An-/Aus-Ventil (23) stromaufwärts beziehungsweise stromabwärts in der Heizmediumzirkulationsleitung (11) angeordnet sind.

4. Verfahren zum Betreiben einer Rauchgasbehandlungsvorrichtung nach Anspruch 2, das Folgendes aufweist:
(a) ein vollständiges Öffnen des ersten An-/Aus-Ventils (21), ein vollständiges Schließen des zweiten An-/Aus-Ventils (22) und des dritten An-/Aus-Ventils (23) und ein Starten der Zirkulationspumpe (18), um das Heizmedium zwischen der dritten Heizmediumumgehungsleitung (19) und der Heizmediumverwendungseinheit (10) zu zirkulieren;
(b) wenn die Temperatur des Rauchgases, die von dem ersten Rauchgasthermometer (TE1) gemessen wird, oder die Temperatur des Rauchgases, die von dem zweiten Rauchgasthermometer (TE2) gemessen wird, geringer als eine voreingestellte Temperatur ist, ein Öffnen des Rauchgastemperatursteuerventils (CV1) und ein Öffnen des zweiten Heizmediumströmungsratensteuerventils (CV3), sodass das Heizmedium normal zwischen der zweiten Heizmediumumgehungsleitung (15) und der Wärmerückgewinnungseinheit (9) zirkuliert; und
(c) wenn die Temperatur des Rauchgases, die von dem ersten Rauchgasthermometer (TE1) gemessen wird, oder die Temperatur des Rauchgases, die von dem zweiten Rauchgasthermometer (TE2) gemessen wird, höher als die voreingestellte Temperatur ist, ein Öffnen des zweiten An-/Aus-Ventils (22) und des dritten An-/Aus-Ventils (23), ein Schließen des ersten An-/Aus-Ventils (21) und ein simultanes Starten eines Schließens des ersten Heizmediumströmungsratensteuerventils (CV2) in der ersten Heizmediumumgehungsleitung (13) und des zweiten Heizmediumströmungsratensteuerventils (CV3) in der zweiten Heizmediumumgehungsleitung (15), um ein Zirkulieren des Heizmediums zwischen der Wärmerückgewinnungseinheit (9) und der Heizmediumverwendungseinheit (10) durch die Heizmediumzirkulationsleitung (11) zu starten.

5. Verfahren zum Betreiben einer Rauchgasbehandlungsvorrichtung nach Anspruch 4, das anstelle von Schritt (b) Folgendes aufweist,
(d) wenn die Temperatur des Rauchgases, die von dem ersten Rauchgasthermometer (TE1) gemessen wird oder die Temperatur des Rauchgases, die von dem zweiten Rauchgasthermometer (TE2) gemessen wird, geringer als eine voreingestellte Temperatur ist, ein Öffnen des Rauchgastemperatursteuerventils (CV1), ein Öffnen des zweiten Heizmediumströmungsratensteuerventils (CV3), um das Heizmedium zwischen der zweiten Heizmediumumgehungsleitung (15) und der Wärmerückgewinnungseinheit (9) zu zirkulieren, wobei das Verfahren ferner Folgendes aufweist
ein Öffnen des ersten Heizmediumströmungsratensteuerventils (CV2), und
ein Starten der Hilfspumpe (17), um das Heizmedium zwangsweise zwischen der ersten Heizmediumumgehungsleitung (13) und der Wärmerückgewinnungseinheit (9) zu zirkulieren.

## Revendications

1. Appareil de traitement de gaz d'échappement, dans lequel un précipitateur (4) capable de traiter un gaz d'échappement contenant de la poussière d'un appareil de combustion incluant une chaudière (1) et une unité de désulfurisation (6) capable de traiter un gaz d'échappement contenant des oxydes de soufre sont disposés depuis un côté amont du chemin d'écoulement de gaz d'échappement, comprenant :
une unité de récupération de chaleur (9) reliée au chemin d'écoulement de gaz d'échappement au niveau d'un orifice d'entrée du précipitateur (4),
une unité d'utilisation de milieu chauffant (10) reliée à une région indépendante du chemin d'écoulement de gaz d'échappement,
une conduite de circulation de milieu chauffant (11) à travers laquelle un milieu chauffant est capable d'être mis en circulation et acheminé est reliée entre l'unité de récupération de chaleur (9) et l'unité d'utilisation de milieu chauffant (10),
un clapet de régulation de température de gaz d'échappement (CV1) pour réguler une température du gaz d'échappement passant à travers le chemin d'écoulement de gaz d'échappement reliée à la conduite de circulation de milieu chauffant (11),
une première conduite de dérivation de milieu chauffant (13) capable de permettre au milieu chauffant provenant d'un orifice de sortie de l'unité de récupération de chaleur (9) de circuler vers un orifice d'entrée de l'unité de récupération de chaleur (9) tout en contournant l'unité d'utilisation de milieu chauffant (10) reliée à la conduite de circulation de milieu chauffant (11),
un premier clapet de régulation de débit de milieu chauffant (CV2) relié à la première conduite de dérivation de milieu chauffant (13),
une deuxième conduite de dérivation de milieu chauffant (15) capable de permettre au milieu chauffant provenant d'un orifice de sortie de l'unité d'utilisation de milieu chauffant (10) de retourner à un orifice d'entrée de l'unité d'utilisation de milieu chauffant (10) tout en contournant l'unité de récupération de chaleur (9) et à la première conduite de dérivation de milieu chauffant (13) reliée à la conduite de circulation de milieu chauffant (11),
un deuxième clapet de régulation de débit de milieu chauffant (CV3) relié à la deuxième conduite de dérivation de milieu chauffant (15),
**caractérisé en ce que** :
une pompe auxiliaire (17) capable d'acheminer le milieu chauffant depuis l'orifice de sortie de l'unité de récupération de chaleur (9) vers l'orifice d'entrée de l'unité de récupération de chaleur (9) reliée à la première conduite de dérivation de milieu chauffant (13),
une pompe de circulation (18) capable de faire circuler et d'acheminer le milieu chauffant vers l'unité de récupération de chaleur (9) reliée à la conduite de circulation de milieu chauffant (11) en amont d'une jonction de la conduite de circulation de milieu chauffant (11) et de la deuxième conduite de dérivation de milieu chauffant (15),
un premier thermomètre de gaz d'échappement (TE1) qui mesure la température du gaz d'échappement est disposé au niveau de l'orifice d'entrée de l'unité de récupération de chaleur (9) dans le chemin d'écoulement de gaz d'échappement,
un deuxième thermomètre de gaz d'échappement (TE2) capable de mesurer la température du gaz d'échappement est disposé au niveau de l'orifice de sortie de l'unité de récupération de chaleur (9) reliant le chemin d'écoulement de gaz d'échappement, et
un thermomètre de milieu chauffant (TE3) capable de mesurer la température du milieu chauffant est disposé dans la conduite de circulation de milieu chauffant (11) au niveau de l'orifice d'entrée de l'unité de récupération de chaleur (9).

2. Procédé pour faire fonctionner l'appareil de traitement de gaz d'échappement selon la revendication 1, dans lequel, durant le démarrage ou juste après l'allumage, le procédé comprend :
(a) le démarrage de la pompe de circulation (18) et l'ouverture complète du deuxième clapet de régulation de débit de milieu chauffant (CV3) pour faire circuler le milieu chauffant à travers la deuxième conduite de dérivation de milieu chauffant (15) ;
(b) quand la température du gaz d'échappement mesurée par le premier thermomètre de gaz d'échappement (TE1) ou la température du gaz d'échappement mesurée par le deuxième thermomètre de gaz d'échappement (TE2) est inférieure à une température prédéfinie, le clapet de régulation de température de gaz d'échappement (CV1) reliant la conduite de circulation de milieu chauffant (11) est maintenu fermé ;
(c) quand la température du gaz d'échappement mesurée par le premier thermomètre de gaz d'échappement (TE1) ou la température du gaz d'échappement mesurée par le deuxième thermomètre de gaz d'échappement (TE2) devient supérieure à la température prédéfinie, le début de l'ouverture du clapet de régulation de température de gaz d'échappement (CV1) afin de commencer à faire circuler le milieu chauffant à travers la conduite de circulation de milieu chauffant (11) et le début simultané de la fermeture du deuxième clapet de régulation de débit de milieu chauffant (CV3) ;
(d) le début de l'ouverture du premier clapet de régulation de débit de milieu chauffant (CV2) avec le deuxième clapet de régulation de débit de milieu chauffant (CV3) pas complètement fermé et le démarrage simultané de la pompe auxiliaire (17) pour acheminer le milieu chauffant dans la première conduite de dérivation de milieu chauffant (13) ;
(e) la régulation du degré d'ouverture du premier clapet de régulation de débit de milieu chauffant (CV2) de telle sorte que la température du milieu chauffant ne tombe pas sous une température spécifiée, sur la base de la température du milieu chauffant mesurée par le thermomètre de milieu chauffant (TE3) ; et
(f) quand la température du gaz d'échappement mesurée par le premier thermomètre de gaz d'échappement (TE1) ou la température du gaz d'échappement mesurée par le deuxième thermomètre de gaz d'échappement (TE2) ou la température du milieu chauffant mesurée par le thermomètre de milieu chauffant (TE3) devient supérieure à la température prédéfinie par une température prédéfinie, l'arrêt du fonctionnement de la pompe auxiliaire (17) suivi de la fermeture du premier clapet de régulation de débit de milieu chauffant (CV2).

3. Appareil de traitement de gaz d'échappement selon la revendication 1, dans lequel :
une troisième conduite de dérivation de milieu chauffant (19) capable de permettre au milieu chauffant provenant de l'orifice de sortie de l'unité d'utilisation de milieu chauffant (10) de retourner à l'orifice d'entrée de l'unité d'utilisation de milieu chauffant (10) tout en contournant l'unité de récupération de chaleur (9), la première conduite de dérivation de milieu chauffant (13) et la deuxième conduite de dérivation de milieu chauffant (15),
un premier clapet on/off (21) relié à la troisième conduite de dérivation de milieu chauffant (19),
un deuxième clapet on/off (22) relié à la conduite de circulation de milieu chauffant (11) entre une jonction de la conduite de circulation de milieu chauffant (11) et de la deuxième conduite de dérivation de milieu chauffant (15) et une jonction de la conduite de circulation de milieu chauffant (11) et de la troisième conduite de dérivation de milieu chauffant (19),
un troisième clapet on/off (23) relié à la conduite de circulation de milieu chauffant (11) entre une jonction de la conduite de circulation de milieu chauffant (11) et de la deuxième conduite de dérivation de milieu chauffant (15) et une jonction de la conduite de circulation de milieu chauffant (11) et de la troisième conduite de dérivation de milieu chauffant (19), et
le deuxième clapet on/off (22) et le troisième clapet on/off (23) sont disposés en amont et en aval, respectivement, dans la conduite de circulation de milieu chauffant (11).

4. Procédé pour faire fonctionner un appareil de traitement de gaz d'échappement selon la revendication 2, comprenant :
(a) l'ouverture totale du premier clapet on/off (21), l'ouverture totale du deuxième clapet on/off (22) et l'ouverture totale du troisième clapet on/off (23), et le démarrage de la pompe de circulation (18) pour faire circuler le milieu chauffant entre la troisième conduite de dérivation de milieu chauffant (19) et l'unité d'utilisation de milieu chauffant (10) ;
(b) quand la température du gaz d'échappement mesurée par le premier thermomètre de gaz d'échappement (TE1) ou la température du gaz d'échappement mesurée par le deuxième thermomètre de gaz d'échappement (TE2) est inférieure à une température prédéfinie, l'ouverture du clapet de régulation de température de gaz d'échappement (CV1) et l'ouverture du deuxième clapet de régulation de débit de milieu chauffant (CV3) de telle sorte que le milieu chauffant circule normalement entre la deuxième conduite de dérivation de milieu chauffant (15) et l'unité de récupération de chaleur (9) ; et
(c) quand la température du gaz d'échappement mesurée par le premier thermomètre de gaz d'échappement (TE1) ou la température du gaz d'échappement mesurée par le deuxième thermomètre de gaz d'échappement (TE2) devient supérieure à la température prédéfinie, l'ouverture du deuxième clapet on/off (22) et du troisième clapet on/off (23), la fermeture du premier clapet on/off (21), et le début simultané de la fermeture du premier clapet de régulation de débit de milieu chauffant (CV2) dans la première conduite de dérivation de milieu chauffant (13) et du deuxième clapet de régulation de débit de milieu chauffant (CV3) dans la deuxième conduite de dérivation de milieu chauffant (15) pour commencer à faire circuler le milieu chauffant entre l'unité de récupération de chaleur (9) et l'unité d'utilisation de milieu chauffant (10) à travers la conduite de circulation de milieu chauffant (11).

5. Procédé pour faire fonctionner un appareil de traitement de gaz d'échappement selon la revendication 4, comprenant, à la place de l'étape (b),
(d) quand la température du gaz d'échappement mesurée par le premier thermomètre de gaz d'échappement (TE1) ou la température du gaz d'échappement mesurée par le deuxième thermomètre de gaz d'échappement (TE2) est inférieure à une température prédéfinie, l'ouverture du clapet de régulation de température de gaz d'échappement (CV1), l'ouverture du deuxième clapet de régulation de débit de milieu chauffant (CV3) pour faire circuler le milieu chauffant entre la deuxième conduite de dérivation de milieu chauffant (15) et l'unité de récupération de chaleur (9), le procédé comprenant en outre
l'ouverture du premier clapet de régulation de débit de milieu chauffant (CV2) et
le démarrage de la pompe auxiliaire (17) pour faire circuler de force le milieu chauffant entre la première conduite de dérivation de milieu chauffant (13) et l'unité de récupération de chaleur (9).
